# EUROPÄISCHE PATENTSCHRIFT

(11) **EP 3 230 334 B1**
(45) Veröffentlichungstag und Bekanntmachung des Hinweises auf die Patenterteilung: **01.05.2019**
(21) Anmeldenummer: 15802081.8
(22) Anmeldetag: 30.11.2015
(51) Int. Cl.: C08G 18/62, C08G 18/75, C08G 18/79, C08G 18/80, C08G 18/08, C09D 175/04

(54) **NICHTWÄSSRIGE BESCHICHTUNGSMITTELZUSAMMENSETZUNGEN, DARAUS HERGESTELLTE BESCHICHTUNGEN MIT VERBESSERTER HAFTUNG UND KRATZFESTIGKEIT SOWIE DEREN VERWENDUNG**
NON-AQUEOUS COATING COMPOUNDS, COATINGS PRODUCED THEREFROM HAVING IMPROVED ADHESION AND ABRASION RESISTANCE, AND THEIR USE
COMPOSITIONS D'AGENT DE REVÊTEMENT NON AQUEUSES, REVÊTEMENTS FABRIQUÉS À PARTIR DE CELLES-CI AYANT UNE ADHÉRENCE ET UNE RÉSISTANCE À L'ABRASION AMÉLIORÉE ET LEUR UTILISATION

(30) Priorität: 08.12.2014 EP 14196777
(43) Veröffentlichungstag der Anmeldung: 18.10.2017
(73) Patentinhaber: BASF Coatings GmbH, 48165 Münster (DE)
(72) Erfinder: KLEIN, Guenter, 48165 Muenster (DE); WENKING, Ulrike, 48565 Steinfurt-Borghorst (DE); WEIHER, Christian, 48165 Muenster (DE); FEIGL, Andreas, 48317 Drensteinfurt (DE)
(74) Vertreter: BASF IP Association
(86) Internationale Anmeldenummer: PCT/EP2015/078060
(87) Internationale Veröffentlichungsnummer: WO 2016/091638

(56) Entgegenhaltungen:
- US-A1- 2005 064 202

## Beschreibung

Die vorliegende Erfindung betrifft nichtwässrige Beschichtungsmittelzusammensetzungen enthaltend mindestens eine polyhydroxylgruppenhaltige Komponente (A) und mindestens eine polyisocyanatgruppenhaltige Komponente (B). Gegenstand der vorliegenden Erfindung sind außerdem die aus diesen Beschichtungsmittelzusammensetzungen hergestellten Beschichtungen sowie deren Verwendung, insbesondere für die Automobilserienlackierung, die Automobilreparaturlackierung und die Beschichtung von Anbauteilen sowie von Kunststoffen.

Bei einer typischen Mehrschichtlackierung in der Automobilserienlackierung ist auf einem mit einer Elektrotauchlackierung beschichteten Substrat eine Füllerschicht, eine Basislackschicht und eine Klarlackschicht aufgebracht. Als Klarlacke können beispielsweise 2-Komponentenklarlacke (2K-Klarlacke) eingesetzt werden. Bei einem Klarlack handelt es sich um einen Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. In der Automobilserienlackierung kann es zum Überbrennen der resultierenden Mehrschichtlackierung kommen. Unter dem Begriff Überbrennen ist die Veränderung der Lackoberfläche durch lokale Überhitzung zu verstehen. Durch das Überbrennen verschlechtern sich insbesondere die Haftungseigenschaften der resultierenden Klarlackoberfläche, beispielsweise für den Fall der Reparaturlackierung oder der Scheibenverklebung. Zur Überbrennung kann es in zwei Fällen kommen:
Die Karosse wird mehrmals bei der empfohlenen Temperatur eingebrannt (z.B. 3 mal bei 135°C über je 20 Minuten).

Die Karosse (oder einzelne Bauteile) werden über der empfohlenen Einbrenntemperatur eingebrannt.

Die Haftung der Klarlackschicht wird häufig durch den Zusatz entsprechender Additive, insbesondere auf Silanbasis, verbessert. So ist es aus der WO07/137632 bekannt, die Haftung, insbesondere für die Scheibenverklebung von Automobilklarlacken, durch Zusatz von silanisierten Isocyanaten als Haftvermittler und von Diphosphonsäurediestern als Katalysator zu verbessern.

Außerdem sind aus der EP-B-1 664 222 Beschichtungsmittel, insbesondere Automobil-Klarlacke, bekannt, die als Bindemittel 10 bis 90 Gew.-%, bevorzugt 40 bis 80 Gew.-%, fluorierte Silanpolymere und bevorzugt eine polyhydroxylgruppenhaltige Bindemittel-Komponente sowie ein Polyisocyanat-Vernetzungsmittel enthalten. Die fluorierten Silanpolymere werden insbesondere durch Polymerisation von ethylenisch ungesättigten Monomeren mit Silangruppen, ethylenisch ungesättigten Monomeren mit Fluorfunktionalität und weiteren Comonomeren erhalten. Die durch die Verwendung derartiger fluorierter Silanpolymerer häufig verschlechterte Haftung der resultierenden Beschichtung zu nachfolgenden Beschichtungen wird gemäß dieser Schrift durch den Zusatz von speziellen fluorierten Urethanadditiven verbessert. Diese fluorierten Urethanadditive werden dadurch hergestellt, dass zunächst 0,45 bis 1,0 Äquivalente der Isocyanatgrupen von Diisocyanaten und Polyisocyanaten mit einem fluorierten Monoalkohol umgesetzt werden und anschließend die ggf. noch vorhandenen restlichen Isocyanatgruppen mit einem Polyoxyethylen-/Polyoxypropylenglykol oder mit einem aminofunktionellen Silan umgesetzt werden.

Aus der WO2013/081892 sind Beschichtungsmittel bekannt, die eine polyhydroxylgruppenhaltige Bindemittelkomponente und einen Vernetzer mit Isocyanatgruppen und mit Fluorethergruppen enthalten, wobei der Fluorgehalt der Beschichtungsmittel zwischen 0,1 und 3,0 Gew.-% liegt, bezogen auf den Harzfestkörper des Beschichtungsmittels. Die Vernetzer werden hierbei hergestellt durch Umsetzung von Polyisocyanaten mit fluorhaltigen Polyetherpolyolen, die mindestens eine -OCH₂CₙF₂ₙ₊₁ Gruppe aufweisen, mit n=1 oder 2. Diese Beschichtungsmittel werden als Klarlack zur Herstellung von Mehrschichtlackierungen, beispielsweise im Bereich der Automobillackierung, eingesetzt und führen zu Beschichtungen, die leicht zu reinigen sind und eine reduzierte Verschmutzungsneigung aufweisen. Außerdem wiesen die resultierenden Beschichtungen gute optische Eigenschaften, ein sogenanntes gutes Appearance, und einen hohen Glanz auf.

Außerdem sind in der noch nicht veröffentlichten europäischen Patentanmeldung EP 2013197704.3 und der noch nicht veröffentlichten europäischen Patentanmeldung EP 2013197695.3 Umsetzungsprodukte von isocyanatofunktionellen Silanen mit alpha, omega-hydroxyfunktionalisierten Oligoestern und ihre Verwendung als Haftvermittler in Beschichtungsmitteln, insbesondere lösemittelbasierten Füllern und lösemittelbasierten Klarlacken, beschrieben.

Schließlich sind aus der WO 08/74491, WO 08/74490, der WO 08/74489, der WO09/077181 und der WO 10/149236 Beschichtungsmittel bekannt, bei denen die eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf. Verbesserungsbedürftig bei diesen Beschichtungsmitteln ist die Verschmutzungsneigung der resultierenden Beschichtungen. Wünschenswert ist außerdem die Bereitstellung von Klarlackoberflächen, die sehr leicht zu reinigen sind und die oftmals auch als "easy-to-clean-Oberfläche" bezeichnet werden.

### Aufgabe

Aufgabe der vorliegenden Erfindung war es daher, nichtwässrige Beschichtungsmittelzusammensetzungen zur Verfügung zu stellen, die zu Beschichtungen, insbesonderte Klarlackschichten, mit einer verbesserten Haftung führen. Eine Verbesserung der Haftungseigenschaften soll, insbesondere nach dem Überbrennen, für die Reparaturlackierung und die Scheibenverklebung erzielt werden. Dabei soll zudem die Grundrezeptur eines herkömmlichen Klarlacksystems so wenig wie möglich verändert werden.

Des Weiteren sollen durch die Änderung die schützenden und dekorativen Eigenschaften des Klarlacks, wie die Mikroeindringhärte, nicht beeinträchtigt werden. Insbesondere sollten sich die Beschichtungen und Lackierungen, speziell die Klarlackierungen, auch in Schichtdicken > 40 µm herstellen lassen, ohne dass Spannungsrisse auftreten. Darüber hinaus sollten die Beschichtungsmittel die üblicherweise an die Klarlackschicht bei Automobilserienlackierungen und Autoreparaturlackierungen gestellten Anforderungen erfüllen.

Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend mindestens eine polyhydroxylgruppenhaltige Komponente (A), mindestens eine polyisocyanatgruppenhaltige Komponente (B), mindestens einen Katalysator (D),
und
mindestens ein, von der Komponente (B) verschiedenes, Urethanadditiv (PF), welches mindestens eine Perfluoralkylgruppe der Formel (I)

CR¹₃-(CR²₂)ₓ- (I),

mit
- R¹, R² =: unabhängig voneinander H, F und/oder CF₃, wobei aber R¹ und R² nicht gleichzeitig H sein dürfen und
- x =: 1 bis 20, bevorzugt x = 3 bis 11, besonders bevorzugt x = 5 bis 7,
und
mindestens eine Silangruppe der Formel (II) aufweist

-X-Si-R³ₛG₃₋ₛ (II)

mit
- G =: identische oder unterschiedliche hydrolysierbare Gruppen, bevorzugt Halogen, insbesondere Chlor und Brom, Alkoxygruppe, Alkylcarbonylgruppe und/oder Acyloxygruppe, besonders bevorzugt Alkoxygruppe
- X =: organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
- R³ =: Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R³ = Alkylrest, insbesondere mit 1 bis 6 C-Atomen,
- s =: 0 bis 2, bevorzugt 0 bis 1, besonders bevorzugt s = 0,
dadurch gekennzeichnet, dass das Urethanadditiv (PF) hergestellt worden ist, indem
0,5 bis 20 Mol-% der ursprünglich vorhandenen Isocyanatgruppen mindestens eines Polyisocyanates (PI) mit einer - von der Komponente (IIa) verschiedenen - Komponente (la), die mindestens eine Perfluoralkylgruppe der Formel (I) und eine gegenüber Isocyanatgruppen reaktive Gruppe aufweist ,und
10 bis 99,5 Mol-% der ursprünglich vorhandenen Isocyanatgruppen des Polyisocyanates (PI) mit einer - von der Komponente (la) verschiedenen - Komponente (IIa), die mindestens eine Silangruppe der Formel (II) und eine gegenüber Isocyanatgruppen reaktive Gruppe aufweist,
umgesetzt worden sind.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es wurde nun überraschenderweise gefunden, dass der Zusatz der erfindungsgemäß eingesetzten Urethanadditive (PF) die Haftung der Klarlackschicht insbesondere im Falle des Überbrennens deutlich verbessert, ohne die übrigen guten Eigenschaften der Beschichtung, insbesondere deren Mikroeindringhärte, signifikant zu verschlechtern.

Ferner erfüllen die Beschichtungsmittelzusammensetzungen auch die üblicherweise an die Klarlackschicht bei der Automobilserienlackierung und der Automobilreparaturlackierung gestellten Anforderungen. Insbesondere lassen sich die Beschichtungen und Lackierungen, speziell die Klarlackierungen, auch in Schichtdicken > 40 µm herstellen, ohne dass Spannungsrisse auftreten. Schließlich sind die Beschichtungsmittelzusammensetzungen einfach und sehr gut reproduzierbar herstellbar.

### Beschreibung der Erfindung

### Die erfindungsgemäßen Beschichtungsmittel

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 1 g der jeweiligen Probe auf einen Festkörperdeckel aufgebracht und für 1 h bei 130°C erhitzt, auf Raumtemperatur abgekühlt und dann zurückgewogen (in Anlehnung an ISO 3251). Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungszusammensetzung einstellen und bestimmen zu können.

Der Bindemittelanteil (auch nicht-flüchtiger Anteil oder Festkörpergehalt genannt) der einzelnen Komponenten (A) bzw. (B) bzw. (C) bzw. (E) des Beschichtungsmittels wird also dadurch bestimmt, dass eine kleine Probe der jeweiligen Komponente (A) bzw. (B) bzw. (C) bzw. (E) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe nach Trocknung bei 130°C geteilt durch das Gewicht der jeweiligen Probe vor der Trocknung.

Im Falle von handelsüblichen Komponenten kann der Bindemittelanteil dieser Komponente auch hinreichend genau gleich dem angegebenen Festkörpergehalt gesetzt werden, sofern nichts anderes angegeben ist.

Der Bindemittelanteil (auch nicht-flüchtiger Anteil oder Festkörpergehalt genannt) des Urethanadiitivs (PF) wird rechnerisch aus dem Anteil der einzelnen zu seiner Herstellung eingesetzten Verbindungen (I-a), (II-a) und ggf. (III-a) sowie dem Polyisocyanat (PI) ermittelt.

Der Bindemittelanteil der Beschichtungsmittelzusammensetzung wird rechnerisch aus der Summe der Bindemittelanteile der einzelnen Bindemittel- und Vernetzerkomponenten A), (B), (C), (PF) und (E) des Beschichtungsmittels ermittelt.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114 experimentell durch Titration bestimmt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungs-indexdetektor bestimmt. Als Elutionsmittel wurde Tetrahydrofuran enthaltend 0.1 Vol.-% Essigsäure mit einer Elutionsgeschwindigkeit von 1 ml/min verwendet. Die Kalibrierung wird mittels Polystyrol-Standards durchgeführt.

Die Glasübergangstemperatur Tg wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

### Die polyhydroxylgruppenhaltige Komponente (A)

Als polyhydroxylgruppenhaltige Komponente (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen zahlenmittlere Molekulargewichte Mn >= 300 g/mol, bevorzugt Mn = 400 - 30.000 g/mol, besonders bevorzugt Mn = 500 - 15.000 g/mol, und massenmittlere Molekulargewichte Mw > 500 g/mol, bevorzugt zwischen 800 und 100.000 g/mol, insbesondere zwischen 900 und 50.000 g/mol, gemessen mittels Gelpermeationschromatographie (GPC) gegen einen Polystyrolstandard auf.

Bevorzugt sind als Komponente (A) Polyesterpolyole, Polyacrylatpolyole und/oder Polymethacrylatpolyole sowie deren Mischpolymerisate - im folgenden Polyacrylat-polyole genannt -, Polyurethanpolyole, Polysiloxanpolyole und Mischungen dieser Polyole.

Die Polyole (A) weisen bevorzugt eine OH-Zahl von 30 bis 400 mg KOH/g, insbesondere zwischen 70 und 250 mg KOH/g, auf. Im Falle der Poly-(Meth)-Acrylat-Copolymerisate kann die OH-Zahl auch durch Berechnung auf Basis der eingesetzten OH-funktionellen Monomere ausreichend genau bestimmt werden.

Die Polyole (A) weisen bevorzugt eine Säurezahl zwischen 0 und 30 mg KOH/g auf.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -40°C und 60°C. Polyurethanpolyole werden vorzugsweise durch Umsetzung von oligomeren Polyolen, insbesondere von Polyesterpolyol-Präpolymeren, mit geeigneten Di- oder Polyisocyanaten hergestellt und sind beispielsweise in EP-A-1 273 640 beschrieben. Insbesondere werden Umsetzungsprodukte von Polyesterpolyolen mit aliphatischen und/oder cycloaliphatischen Di- und/oder Polyisocyanaten eingesetzt.

Die erfindungsgemäß bevorzugt eingesetzten Polyurethanpolyole weisen ein zahlenmittleres Molekulargewicht Mn >= 300 g/mol, bevorzugt Mn = 700 - 2.000 g/mol, besonders bevorzugt Mn = 700 - 1.300 g/mol, sowie vorzugsweise ein massenmittleres Molekulargewicht Mw > 500 g/mol, bevorzugt zwischen 1.500 und 3.000 g/mol, insbesondere zwischen 1.500 und 2.700 g/mol auf, jeweils gemessen mittels Gelpermeationschromatographie (GPC) gegen einen Polystyrolstandard.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Als polyhydroxylgruppenhaltige Komponente (A) werden besonders bevorzugt von dem Urethanadditiv (PF) verschiedene Polyesterpolyole, Polyacrylatpolyole, Polymethacrylatpolyole, Polyurethanpolyole oder deren Mischungen und ganz besonders bevorzugt Mischungen von Poly(meth)acrylatpolyolen eingesetzt.

Die erfindungsgemäß bevorzugt eingesetzten Polyesterpolyole (A) weisen ein zahlenmittleres Molekulargewicht Mn >= 300 g/mol, bevorzugt Mn = 400 - 10.000 g/mol, besonders bevorzugt Mn = 500 - 5.000 g/mol, sowie vorzugsweise ein massenmittleres Molekulargewicht Mw > 500 g/mol, bevorzugt zwischen 800 und 50.000 g/mol, insbesondere zwischen 900 und 10.000 g/mol auf, jeweils gemessen mittels Gelpermeationschromatographie (GPC) gegen einen Polystyrolstandard.

Die erfindungsgemäß bevorzugt eingesetzten Polyesterpolyole (A) weisen bevorzugt eine OH-Zahl von 30 bis 400 mg KOH/g, insbesondere zwischen 100 und 250 mg KOH/g, auf.

Die erfindungsgemäß bevorzugt eingesetzten Polyesterpolyole (A) weisen bevorzugt eine Säurezahl zwischen 0 und 30 mg KOH/g auf.

Geeignete Polyesterpolyole sind beispielsweise auch in EP-A-0 994 117 und EP-A-1 273 640 beschrieben.

Die erfindungsgemäß bevorzugt eingesetzten Poly(meth)acrylatpolyole (A) sind in der Regel Copolymerisate und weisen vorzugsweise ein zahlenmittleres Molekulargewicht Mn >= 300 g/mol, bevorzugt Mn = 500 - 15.000 g/mol, besonders bevorzugt Mn = 900 - 10.000 g/mol, sowie vorzugsweise massenmittlere Molekulargewichte Mw zwischen 500 und 20.000 g/mol, insbesondere zwischen 1.000 und 15.000 g/mol auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -40 und < 60 °C (gemessen mittels DSC-Messungen nach DIN-EN-ISO 11357-2).

Die Poly(meth)acrylatpolyole (A) weisen bevorzugt eine OH-Zahl von 60 bis 300 mg KOH/g, insbesondere zwischen 70 und 250 mg KOH/g, sowie eine Säurezahl zwischen 0 und 30 mg KOH/g auf. Die Hydroxylzahl (OH-Zahl) und die Säurezahl werden wie oben beschrieben bestimmt (DIN 53240-2 bzw. DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Die polyisocyanatgruppenhaltige Komponente (B)

Als Komponente (B) geeignet sind an sich bekannte substituierte oder unsubstituierte aromatische, aliphatische, cycloaliphatische und/oder heterocyclische Polyisocyanate, bevorzugt aliphatische und/oder cycloaliphatische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur® W der Fa. Bayer AG), Tetramethylxylyldiisocyanate (z.B. TMXDI ® der Fa. American Cyanamid) und Mischungen der vorgenannten Polyisocyanate. Bevorzugte Polyisocyanate sind auch die Biuret-Dimere und die Isocyanurat-Trimere der vorgenannten Diisocyanate. Besonders bevorzugte Polyisocyanate (B) sind Hexamethylen-1,6-diisocyanat, Isophorondiisocyanat und 4,4'-Methylendicyclohexyldiisocyanat, deren Biuret-Dimere und/oder deren Isocyanurat-Trimere und/oder deren asymmetrische Trimere, wie z:B. das im Handel unter der Bezeichnung Desmodur® N3900 erhältliche asymmetrische HDI-Trimer.

In einer weiteren Ausführungsform der Erfindung sind als Komponente (B) geeignet Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Die Komponente (B) kann in einem geeigneten Lösemittel (L) vorliegen. Geeignete Lösemittel (L) sind solche, die eine ausreichende Löslichkeit der Polyisocyanatkomponente ermöglichen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, Xylol, n-Hexan, Cyclohexan, Solventnaphtha®, 2-Methoxypropylacetat (MPA), und Ethylethoxypropionat.

### Die hydroxylgruppenhaltige Komponente (C)

Die erfindungsgemäßen Beschichtungsmittelzusammensetzungen können ggf. außer der polyhydroxylgruppenhaltigen Komponente (A) noch ein oder mehrere, von der Komponente (A) und dem Urethanadditiv (PF) verschiedene, monomere hydroxylgruppenhaltige Komponenten (C) enthalten. Bevorzugt nehmen diese Komponenten (C) einen Anteil von 0 bis 10 Gew.-%, besonders bevorzugt von 0 bis 5 Gew.-%, jeweils bezogen auf den Bindemittelanteil der Beschichtungsmittelzusammensetzung (also jeweils bezogen auf die Summe aus dem Bindemittelanteil der Komponente (A) plus dem Bindemittelanteil der Komponente (B) plus dem Bindemittelanteil der Komponente (C) plus dem Bindemittelanteil der Komponente (PF) plus dem Bindemittelanteil der Komponente (E)), ein.

Als hydroxylgruppenhaltige Komponente (C) werden niedermolekulare Polyole eingesetzt. Als niedermolekulare Polyole werden beispielsweise Diole, wie bevorzugt Ethylenglykol, Di- und Tri-ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole (C) in untergeordneten Anteilen der Polyolkomponente (A) beigemischt.

### Der Katalysator (D)

Als Katalysatoren für die Vernetzung der Alkoxysilyl-Einheiten sowie für die Reaktion zwischen den Hydroxylgruppen der Verbindung (A) und den Isocyanatgruppen der Verbindung (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid, Bleioctoat, sowie Katalysatoren wie in WO-A-2006/042585 beschrieben. Geeignet sind ferner auch übliche Katalysatoren auf Säurebasis, wie beispielsweise Dodecylbenzolsulfonsäure, Toluolsulfonsäure u.Ä.. Als Katalysatoren für die Vernetzung der Alkoxysilyl-Einheiten werden bevorzugt Aminaddukte der Phosphorsäure oder der Sulfonsäure eingesetzt (z.B. Nacure-Typen der Fa. King Industries).

Als Katalysator (D) werden besonders bevorzugt phosphorhaltige, insbesondere phosphor- und stickstoff-haltige Katalysatoren eingesetzt. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäuremonoestern, cyclischen Phosphorsäuremonoestern, acyclischen Phosphorsäurediestern und cyclischen Phosphorsäurediestern, besonders bevorzugt Aminaddukte der Phosphorsäure-mono- und -di-ester, eingesetzt.

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäurebis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten. Ganz besonders bevorzugt werden vor allem bei niedrigen Härtungstemperaturen von maximal 80°C zur Blockierung der Phosphorsäureester bicyclische Amine, insbesondere Diazabicyclootan (DABCO), eingesetzt.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäßen Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Der Bindemittelanteil der Beschichtungsmittelzusammensetzung wird rechnerisch aus der Summe der Bindemittelanteile der einzelnen Bindemittel- und Vernetzerkomponenten (A), (B), (PF), (C) und (E) des Beschichtungsmittels ermittelt.

### Das Urethanadditiv (PF)

Es ist erfindungswesentlich, dass die Beschichtungsmittelzusammensetzungen mindestens ein, von den Komponenten (A), (B) und (C) verschiedenes, Urethanadditiv (PF) enthalten, welches
mindestens eine Perfluoralkylgruppe der Formel (I)

CR¹₃-(CR²₂)ₓ- (I),

mit
R¹, R² = unabhängig voneinander H, F und/oder CF₃, wobei aber R¹ und R² nicht gleichzeitig H sein dürfen und
x = 1 bis 20, bevorzugt x = 3 bis 11, besonders bevorzugt x = 5 bis 7, und
mindestens eine Silangruppe der Formel (II) aufweist

-X-Si-R³ₛG₃₋ₛ (II)

mit
G = identische oder unterschiedliche hydrolysierbare Gruppen, bevorzugt Halogen, insbesondere Chlor und Brom, Alkoxygruppe, Alkylcarbonylgruppe und/oder Acyloxygruppe, besonders bevorzugt Alkoxygruppe (O R⁵),
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R³ = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R³ = Alkylrest, insbesondere mit 1 bis 6 C-Atomen,
s = 0 bis 2, bevorzugt 0 bis 1, besonders bevorzugt s = 0,
wobei das Urethanadditiv (PF) hergestellt worden ist, indem 0,5 bis 20 Mol-% der ursprünglich vorhandenen Isocyanatgruppen mindestens eines Polyisocyanates (PI) mit einer - von der Komponente (IIa) verschiedenen - Komponente (la), die mindestens eine Perfluoralkylgruppe der Formel (I) und eine gegenüber Isocyanatgruppen reaktive Gruppe aufweist ,und
10 bis 99,5 Mol-% der ursprünglich vorhandenen Isocyanatgruppen des Polyisocyanates (PI) mit einer - von der Komponente (la) verschiedenen - Komponente (IIa), die mindestens eine Silangruppe der Formel (II) und eine gegenüber Isocyanatgruppen reaktive Gruppe aufweist,
umgesetzt worden sind.

Bevorzugt ist das Urethanadditiv (PF) hergestellt worden, indem zumindest ein Teil der ursprünglich vorhandenen Isocyanatgruppen des Polyisocyanates (PI) nicht nur mit den Komponenten (la) und (IIa) umgesetzt worden ist, sondern zusätzlich noch ein Teil der ursprünglich vorhandenen Isocyanatgruppen des Polyisocyanates (PI) mit einer monofunktionellen - von den Komponenten (la) und (IIa) verschiedenen - gegenüber Isocyanatgruppen reaktiven Komponente (IIIa) umgesetzt worden ist.

Besonders bevorzugt ist das Urethanadditiv (PF) daher hergestellt worden, indem
0,5 bis 20 Mol-% der ursprünglich vorhandenen Isocyanatgruppen des Polyisocyanates (PI) mit einer Komponente (la),
30 bis 98,5 Mol-% der ursprünglich vorhandenen Isocyanatgruppen des Polyisocyanates (PI) mit einer Komponente (IIa) und
1 bis 69,5 Mol-% der ursprünglich vorhandenen Isocyanatgruppen des Polyisocyanates (PI) mit einer monofunktionellen - von den Komponenten (la) und (IIa) verschiedenen - gegenüber Isocyanatgruppen reaktiven Komponente (IIIa) umgesetzt worden sind.

Ganz besonders bevorzugt ist das Urethanadditiv (PF) hergestellt worden, indem
1,0 bis 16,0 Mol-%, bevorzugt 1,5 bis 10 Mol-%, der ursprünglich vorhandenen Isocyanatgruppen des Polyisocyanates (PI) mit einer Komponente (Ia),
64 bis 89,0 Mol-%-%, bevorzugt 66 bis 86 Mol-%, der ursprünglich vorhandenen Isocyanatgruppen des Polyisocyanates (PI) mit einer Komponente (IIa) und
10 bis 30 Mol-%, bevorzugt 12,5 bis 25,0 Mol-%,der ursprünglich vorhandenen Isocyanatgruppen des Polyisocyanates (PI) mit einer Komponente (IIIa)
umgesetzt worden sind.

Als Polyisocyanat (PI) geeignet sind die bereits bei der Beschreibung der Komponente (B) aufgeführten, an sich bekannten substituierte oder unsubstituierten aromatischen, aliphatischen, cycloaliphatischen und/oder heterocyclischen Di- bzw. Polyisocyanate. Bevorzugte Polyisocyanate (PI) sind substituierte oder unsubstituierten aliphatischen und/oder cycloaliphatische Di- bzw. Polyisocyanate. Bevorzugte Polyisocyanate sind auch die Biuret-Dimere und die Isocyanurat-Trimere der vorgenannten Diisocyanate. Besonders bevorzugte Polyisocyanate (B) sind Tetramethylen-1,4-diisocyanat, Hexamethylen-1,6-diisocyanat, 2,2,4-Trimethylhexan-1,6-diisocyanat, Ethylendiisocyanat, 1,12-Dodecandiisocyanat, Isophorondiisocyanat, 4,4'-Methylendicyclohexyldiisocyanat und Mischungen der vorgenannten Polyisocyanate sowie der durch Trimerisierung, Dimerisierung, Urethan-, Biuret-, Uretdion- und/oder Allophanatbildung von solchen Polyisocyanaten abgeleiteten Polyisocyanate und/oder deren asymmetrische Trimere, wie z:B. das im Handel unter der Bezeichnung Desmodur® N3900 erhältliche asymmetrische HDI-Trimer, insbesondere der Biurete und/oder der Allophanate und/oder der Isocyanurate solcher Polyisocyanate. Ganz besonders bevorzugt sind Hexamethylen-1,6-diisocyanat, Isophorondiisocyanat und 4,4'-Methylendicyclohexyldiisocyanat, deren Biuret-Dimere und/oder deren Isocyanurat-Trimere.

Es ist erfindungswesentlich, dass das Urethanadditiv (PF) mindestens eine Silangruppe der Formel (II) aufweist. Dabei hat auch die Struktur dieser Silanreste (II) einen Einfluß auf die Reaktivität und damit auch auf die möglichst weitgehende Umsetzung während des Härtens der Beschichtung. Hinsichtlich der Verträglichkeit und der Reaktivität der Silane werden Silane mit 3 hydrolysierbaren Gruppen bevorzugt eingesetzt, d.h. s = 0.

Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen, insbesondere der Alkoxygruppen. Besonders bevorzugt sind Alkoxygruppen (OR⁵) mit R⁵ = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R⁵, R⁵' = Ethyl und/oder Methyl, besonders bevorzugt R⁵, R⁵' = Methyl.

Die Struktureinheiten (II) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem aminofunktionellen Silan der Formel (IIa-1) eingeführt

H-NR⁴ₜ-[X-Si-R³ₛG₃₋ₛ]₂₋ₜ (IIa-1),

wobei X, R³, G und s die bei Formel (II) angegebene Bedeutung haben, R⁴ = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, und t= 0 oder 1 ist.

Geeignet sind beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxysilan (erhältlich z.B. unter dem Markennamen Geniosil® GF 95 von der Fa. Wacker Chemie) oder sekundäre N-Alkylaminosilane, wie z.B. N-(3-(trimethoxysilyl) propyl)butylamin, oder Bisalkoxysilylamine, wie z.B. Bis(3-propyltrimethoxysilyl)amin.

Die Struktureinheiten (II) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten (PI) mit einer Mischung aus mindestens einer Verbindung der Formel (IIa-2) und mindestens einer Verbindung der Formel (IIa-3) eingeführt:

H-NR⁴-(X-SiR³ₛ(OR⁵)₃₋ₛ) (IIa-2)

HN(X-SiR³ᵤ(OR⁵)₃₋ᵤ)ₙ(X'-SiR³'_{w}(OR⁵')_{3-w})ₘ (IIa-3),

wobei R³, R⁴, und s die bei Formel (IIa-1) angegebene Bedeutung haben,
R⁵, R⁵' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R⁵, R⁵' = Ethyl und/oder Methyl, besonders bevorzugt R⁵, R⁵' = Methyl, X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
n = 0 bis 2, m = 0 bis 2, m+n = 2 sowie u, w = 0 bis 2 ist.

Die jeweiligen bevorzugten Alkoxyreste (OR⁵) bzw. (OR⁵') können gleich oder verschieden sein, entscheidend für den Aufbau der Reste ist jedoch, inwiefern diese die Reaktivität der hydrolysierbaren Silangruppen beeinflussen. Bevorzugt ist R⁵ bzw. R⁵' ein Alkylrest, insbesondere mit 1 bis 6 C-Atomen. Besonders bevorzugt sind Reste, die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R⁵ = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Erfindungsgemäß bevorzugte Verbindungen (IIa-3) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (IIa-2) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (IIa-2) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Besonders bevorzugt ist das Urethanadditiv (PF) hergestellt worden, indem als Komponente (IIa) eine Mischung aus
100 bis 5 mol-%, bevorzugt 100 bis 10 mol-%, besonders bevorzugt 100 bis 20 mol-%, ganz besonders bevorzugt 100 bis 40 mol-%, jeweils bezogen auf die Gesamtmenge der Verbindungen (IIa-2) plus (IIa-3), mindestens einer Verbindung der Formel (IIa-2) und
0 bis 95 mol-%, bevorzugt 0 bis 90 mol-%, besonders bevorzugt 0 bis 80 mol-%, ganz besonders bevorzugt 0 bis 60 mol-%, jeweils bezogen auf die Gesamtmenge der Verbindungen (IIa-2) plus (IIa-3), mindestens einer Verbindung der Formel (IIa-3)
eingesetzt worden ist.

Außerdem ist das Urethanadditiv (PF) bevorzugt dadurch hergestellt worden, dass die zur Herstellung des Urethanadditivs (PF) eingesetzte Komponente (la) ein Fluoralkohol der Formel (la-1) ist

CR¹₃-(CR²₂)ₓ-(CH₂)_{y}-O-A_{z}-H (la-1),

wobei
R¹, R² = unabhängig voneinander H, F und/oder CF₃ sind, aber R¹ und R² nicht gleichzeitig H sein dürfen,
x = 1 bis 20, bevorzugt x = 3 bis 11, besonders bevorzugt x = 5 bis 7,
y = 1-6,
z = 0 - 100, bevorzugt z = 0,
A = CR'R"-CR'''R''''-O oder (CR'R")ₐ-O oder CO-(CR'R")_{b}-O,
R', R", R''', R'''' = unabhängig voneinander H, Alkyl, Cycloalkyl, Aryl, beliebiger organischer Rest mit 1 bis 25 C-Atomen,
a,b = 3 - 5, ist.

Insbesondere handelt es sich bei der Polyalkylenoxid-Struktureinheit A_{z} um Homopolymere, Copolymere oder Blockpolymere aus beliebigen Alkylenoxiden oder um Polyoxyalkylenglykole oder um Polylactone.

Beispiele für als Perfluoralkylalkohole (la-1) geeignete Verbindungen sind beispielsweise die in der WO2008/040428, Seite 33, Zeile 4 bis Seite 34, Zeile 3 beschriebenen (Per)fluoralkylalkohole sowie die in der EP-B-1 664 222 B1, Seite 9, Abschnitt [0054], bis Seite 10, Abschnitt [57] beschriebenen (Per)fluoralkylalkohole.

Bevorzugt weist die Komponente (PF) mindestens eine Perfluoralkylgruppe der Formel (I-2) und/oder der Formel (I-3)

CF₃(CF₂)ₖ- (I-2)

F(CF₂CF₂)ₗ - (I-3)

mit
k = 1 bis 20, bevorzugt k = 3 bis 11, besonders bevorzugt k = 5 bis 7,
I = 1 bis 8, bevorzugt I = 1 bis 6, besonders bevorzugt I = 2 bis 3
   auf.

Die Struktureinheiten (I-2) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-2a) eingeführt:

CF₃-(CF₂)ₖ-(CH₂)ₒ-O-H (I-2a)

wobei k = 1 bis 20, bevorzugt k = 3 bis 11, besonders bevorzugt k = 5 bis 7, und o = 1 bis 10, bevorzugt o = 1 bis 4 ist.

Die Struktureinheiten (I-3) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-3a)

F(CF₂CF₂)ₗ-(CH₂CH₂O)_{c}-H (I-3a)

eingeführt, wobei
I = 1 - 8, bevorzugt I = 1 bis 6, besonders bevorzugt I = 2 bis 3,
c = 1 bis 15, bevorzugt c = 5 bis 15 ist.

Beispiele für geeignete Perfluoralkohole sind 3,3,4,4,5,5,6,6,7,7,8,8,8-Tridecafluoroctan-1 -ol, 3,3,4,4,5,5,6,6,7,7,8,8,9,9,10,10,10-heptadecafluordecan-1-ol, 3,3,4,4,5,5,6,6,7,7,8,8,9,9,10,10,11,11,12,12,12-heneicosafluordodecan-1-ol, 3,3,4,4,5,5,6,6,7,7,8,8,9,9,10,10,11,11,12,12,13,13, 14,14,14-pentacosafluortetradecan-1-ol, 3,3,4,4,5,5,6,6,7,7,8,8,9,9,10,10, 11,11,12,12,13,13,14,14,15,15,16,16,16-nonacosafluorhexadecan-1-ol, 3,3,4,4,5,5,6,6,7,7,8,8-Dodecafluorheptan-1-ol, 3,3,4,4,5,5,6,6,7,7,8,8,9,9, 10,10-Hexadecafluornonan-1-ol, 3,3,4,4,5,5,6,6,7,7,8,8,9,9,10,10,11,11, 12,12-eicosafluorundecan-1-ol, 3,3,4,4,5,5,6,6,7,7,8,8,9,9,10,10,11,11, 12,12,13,13,14,14-tetracosafluortridecan-1-ol und 3,3,4,4,5,5,6,6,7,7,8,8, 9,9,10,10,11,11,12,12,13,13,14,14,15,15,16,16-octacosafluorpentadecan-1-ol.

Besonders bevorzugt weist die Komponente (PF) mindestens eine Perfluoralkylgruppe der Formel (I-2)

CF₃-(CF₂)ₖ- (I-2)

auf, bei der k = 1 bis 20, insbesondere k = 3 bis 11, ganz besonders bevorzugt k = 5 bis 7 ist.

Diese bevorzugten Struktureinheiten (I-2) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-2a)

CF₃-(CF₂)ₖ-(CH₂)ₒ-OH (I-2a)

oder Mischungen verschiedener Fluoralkohole der Formel (I-2a) eingeführt, bei denen k = 1 bis 8, bevorzugt k = 1 bis 6, insbesondere k = 1 bis 4, und o = 1 bis 6, insbesondere o = 1 bis 4 und besonders bevorzugt o = 1 bis 2, ist.

Ganz besonders bevorzugt werden Perfluoralkylethanole der Formel (I-2a) mit o = 2, vorzugsweise 2(Perfluorhexyl)ethanol und 2(Perfluoroctyl)ethanol und Gemische verschiedener Perfluoralkylethanole der Formel (I-3a), insbesondere eine Mischung aus 2(Perfluorhexyl)ethanol und 2(Perfluoroctyl)ethanol, ggf. zusammen mit anderen (Per)fluoralkylethanolen, eingesetzt. Vorzugsweise werden Perfluoralkylethanol-Gemische mit 30 bis 49,9 Gew.-% an 2(Perfluorhexyl)ethanol und 30 bis 49,9 Gew.-% an 2(Perfluoroctyl)ethanol, wie die Handelsprodukte Fluowet® EA 612 und Fluowet® EA 812; 2(Perfluorhexyl)ethanol, wie das Handelsprodukt Daikin A-1620, oder 2(Perfluoroctyl)ethanol, wie das Handelsprodukt Daikin A-1820, der Firma Daikin Industries Ltd., Osaka, Japan eingesetzt. Ganz besonders bevorzugt wird 2(Perfluorhexyl)ethanol eingesetzt.

Weiterhin ist das Urethanadditiv (PF) bevorzugt dadurch hergestellt worden, dass die zur Herstellung des Urethanadditivs (PF) eingesetzte Komponente (IIIa) ausgewählt ist aus der Gruppe der primären Monoalkohole, der sekundären Monoalkohole, der teriären Monoalkohole und/oder der sekundären Monoamine.

Beispiele für geeignete Monoalkohole sind Methanol, Ethanol, Propanol, Butanol, Pentanol, Hexanol, Heptanol, Oktanol; Beispiele für geeignete sekundäre Monoalkohole sind 2-Propanol, 2-Butanol, 2-Pentanol, isoAmylalkohol; Beispiele für geeignete tertiäre Monoalkohole sind tert. Butanol, tert-Amylalkohol.

Beispiele für geeignete sekundäre Monoamine sind Dimethylamin, Diethylamin, Dipropylamin, Methylethylamin, 2-Aminopentan, Dibutylamin, N-Methyl-octylamin, Diphenylamin, Phenylethylamin, Piperidin, Pyrolidin, Morpholin u.Ä..

Bevorzugt sind in dem Urethanadditiv (PF) 95 bis 100 Mol-%, besonders bevorzugt 100 Mol-%, der ursprünglich vorhandenen Isocyanatgruppen des Polyisocyanates (PI) mit den Komponenten (la), (IIa) und ggf. (IIIa) umgesetzt worden.

Die Beschichtungsmittelzusammensetzung enthält das Urethanadditiv (PF) im Allgemeinen in einer Menge von 0,05 bis 10,0 Gew.-%, bevorzugt von 0,1 bis 5,0 Gew.-%, jeweils bezogen auf den Bindemittelanteil der Beschichtungsmittelzusammensetzung.

### Die Kombination der Komponenten (A), (B), ggf. (C) und (PF) sowie weitere Komponenten der Beschichtungsmittelzusammensetzungen

Handelt es sich um einkomponentige Beschichtungsmittelzusammensetzungen, so werden polyisocyanatgruppenhaltige Komponenten (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die polyhydroxylgruppenhaltige Komponente (A) sowie weitere nachfolgend beschriebene Komponenten, mit einer weiteren Lackkomponente, enthaltend die Polyisocyanatgruppenhaltige Komponente (B) sowie gegebenenfalls weitere der nachfolgend beschriebenen Komponenten in an sich bekannter Weise vermischt, wobei in der Regel die Lackkomponente, die die Komponente (A) enthält, das Urethanadditiv (PF) sowie einen Teil des Lösemittels enthält.

Die Polyhydroxykomponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind die bereits bei der polyisocyanatgruppenhaltigen Komponente (B) aufgeführten Lösemittel (L).

Die Gewichtsanteile des Polyols (A) und ggf. (C) und des Urethanadditivs (PF) sowie des Polyisocyanates (B) werden vorzugsweise solchermaßen gewählt, dass das molare Äquivalentverhältnis der Hydroxylgruppen der polyhydroxylgruppenhaltigen Komponente (A) plus ggf. (C) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittelzusammensetzungen eingesetzt, die von 30 bis 75 Gew.-%, bevorzugt von 40 bis 65 Gew.-%, jeweils bezogen auf den Bindemittelanteil der Beschichtungsmittelzusammensetzung, mindestens einer polyhydroxylgruppenhaltigen Komponente (A), insbesondere mindestens eines polyhydroxylgruppenhaltigen Polyacrylates (A) und/oder mindestens eines polyhydroxylgruppenhaltigen Polymethacrylates (A), enthalten.

Ebenfalls bevorzugt werden erfindungsgemäß Beschichtungsmittelzusammensetzungen eingesetzt, die von 20 bis 50 Gew.-%, bevorzugt von 25 bis 40 Gew.-%, jeweils bezogen auf den Bindemittelanteil der Beschichtungsmittelzusammensetzung, der polyisocyanatgruppenhaltigen Komponente (B) enthalten.

Daneben können die erfindungsgemäßen Beschichtungsmittel noch ein oder mehrere Aminoplastharze (E) enthalten. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. In der Regel werden solche Aminoplastharze (E) in Anteilen von 0 bis 20 Gew.-%, bevorzugt von 0 bis 15 Gew.-%, bezogen auf den Bindemittelanteil der Beschichtungsmittelzusammensetzung, eingesetzt.

Bevorzugt enthalten die erfindungsgemäßen Beschichtungsmittelzusammensetzungen außerdem mindestens ein übliches und bekanntes, von den Komponenten (A), (B), (D), ggf. (C), ggf. (E) und (PF) verschiedenes Lackadditiv (F) in wirksamen Mengen, d.h. in Mengen vorzugsweise bis zu 20 Gew.-%, besonders bevorzugt von 0 bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die 40 bis 65 Gew.-%, bezogen auf den Bindemittelanteil der Beschichtungsmittelzusammensetzung, mindestens eines polyhydroxylgruppenhaltigen Polyacrylates (A) und/oder mindestens eines polyhydroxylgruppenhaltigen Polymethacrylates (A) und/oder mindestens eines polyhydroxylgruppenhaltigen Polyesterpolyols (A) und/oder eines polyhydroxylgruppenhaltigen Polyurethans (A),
25 bis 40 Gew.-%, bezogen auf den Bindemittelanteil der Beschichtungsmittelzusammensetzung, mindestens einer Komponente (B),
0 bis 5 Gew.-%, bezogen auf den Bindemittelanteil der Beschichtungsmittelzusammensetzung, der hydroxylgruppenhaltigen Komponente (C),
0,1 bis 8,0 Gew.-%, bezogen auf den Bindemittelanteil der erfindungsgemäßen Beschichtungsmittelzusammensetzung, mindestens eines Urethanadditiv (PF)
0 bis zu 15 Gew.-%, bezogen auf den Bindemittelanteil der Beschichtungsmittelzusammensetzung, mindestens eines Aminoplastharzes (E),
0,1 bis 10 Gew.-%, bezogen auf den Bindemittelanteil der erfindungsgemäßen Beschichtungsmittelzusammensetzung, mindestens eines Katalysators (D) für die Vernetzung und
0 bis 10 Gew.-%, bezogen auf den Bindemittelanteil der Beschichtungsmittelzusammensetzung, mindestens eines üblichen und bekannten Lackadditivs (F)
enthalten.

Der bei den Mengen der einzelnen Komponenten angegebene Bindemittelanteil der Beschichtungsmittelzusammensetzung ist jeweils die Summe aus dem Bindemittelanteil der Komponente (A) plus dem Bindemittelanteil der Komponente (B) plus dem Bindemittelanteil der Komponente (C) plus dem Bindemittelanteil der Komponente (PF) plus dem Bindemittelanteil der Komponente (E).

Insbesondere handelt es sich bei den erfindungsgemäßen Beschichtungsmitteln um transparente Beschichtungsmittel, vorzugsweise Klarlacke. Die erfindungsgemäßen Beschichtungsmittel enthalten daher keine Pigmente oder nur organische transparente Farbstoffe oder transparente Pigmente. In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C
Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Herstellung eines Polyacrylat-Polyols (A1)

In einem Reaktor, der mit Stickstoff gespült wurde und auf dem ein Kühler angebracht ist, werden 589,25 Gewichtsteile Solventnaphta® vorgelegt und unter Rühren auf 140°C aufgeheizt. Parallel dazu wurden zwei separate Zuläufe präpariert. Zulauf 1 bestand aus 340,75 Gewichtsteilen Cyclohexylmethacrylat, 262,00 Gewichtsteilen Styrol, 209,25 Gewichtsteilen n - Butylmethacrylat, 235,75 Gewichtsteilen 2 - Hydroxyethylmethacrylat und 262,00 Gewichtsteilen Hydroxypropylmethacrylat. Zulauf 2 bestand aus 61,00 Gewichtsteilen Solventnaphta® und 130,75 Gewichtsteilen Peroxid TBPEH (TERT-BUTYL-PEROXY-2-ETHYLHEXANOAT). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Die Polymerisationslösung wird mit 409,25g Methoxypropylacetat verdünnt. Der Bindemittelanteil des so erhaltenen Produktes wurde zu 55,15 %, die Säurezahl zu 1,5 mg KOH / g (bezogen auf den Festkörper) und die Viskosität (bei 23°C) zu 650 m Pa s bestimmt. Die theoretische OH-Zahl beträgt 156 mgKOH/g.

### Herstellung eines Polyacrylat-Polyols (A2)

In einem Reaktor, der mit Stickstoff gespült wurde und auf dem ein Kühler angebracht ist, werden 678,22 Gewichtsteile Solventnaphta® vorgelegt und unter Rühren auf 140°C aufgeheizt. Parallel dazu wurden zwei separate Zuläufe präpariert. Zulauf 1 bestand aus 335,73 Gewichtsteilen Cyclohexylmethacrylat, 258,28 Gewichtsteilen Styrol, 193,25 Gewichtsteilen n - Butylmethacrylat, 232,38 Gewichtsteilen 2 - Hydroxyethylmethacrylat, 12,83 Gewichtsteilen Acrylsäure und 258,28 Gewichtsteilen Hydroxypropylmethacrylat. Zulauf 2 bestand aus 58,33 Gewichtsteilen Solventnaphta® und 129,03 Gewichtsteilen Peroxid TBPEH (TERT-BUTYL-PEROXY-2-ETHYLHEXANOAT). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Die Polymerisationslösung wir mit einer Mischung aus 146,60g Butylacetat und 196,70 Solventnaphtha verdünnt. Der Bindemittelanteil des so erhaltenen Produktes wurde zu 55,10 %, die Säurezahl zu 9,6 mg KOH / g (bezogen auf den Festkörper) und die Viskosität (bei 23°C) zu 1120 m Pa s bestimmt. Die theoretische OH-Zahl beträgt 156 mgKOH/g.

### Herstellung der Aerosilpaste (A3)

In einer Labor-Rührwerksmühle der Firma Vollrath werden 800g Mahlgut, bestehend aus 656g des Polyacrylats A2, 74,4g Butylacetat und 69,6g Aerosil® R380 (Evonik Industries AG, Hanau - Oberfläche nach BET = 380 ± 30 m2/g), zusammen mit 110g Quarzsand (Korngröße 0,70+0,1 mm) eingewogen und unter Waserkühlung 30 min. angerieben. Anschließend wurde von den Mahlköpern abgetrennt.

### Herstellung der fluorhaltigen Komponenten (PF1) bis (PF6) und der Komponenten (PFV1) bis (PFV2)

Es werden 100 g eines handelsüblichen Isocyanurates von Hexamethylendiisocyanat (Desmodur® N3300, Firma Bayer Materials Science AG) in einen 500ml Dreihalskolben gefüllt. Die Apparatur ist mit einem KPG-Blattrührer, einem Tropftrichter und einem Gaszuführstück zur Einleitung von trockenem Stickstoff bestückt. Das Isocyanat wird mit der in Tabelle 1 angegebenen Menge Solventnaphta® verdünnt und die Lösung auf 70°C erwärmt. Anschließend werden X mol% der NCO-Gruppen mit der in Tabelle 1 angegebenen Menge des ebenfalls in Tabelle 1 angegebenen monofunktionellen Fluoralkohols umgesetzt. Nachdem der theoretische NCO-Wert erreicht ist, werden 20 mol% der restlichen NCO-Gruppen mit Pentanol umgesetzt. Nachdem wiederum der theoretische NCO-Wert erreicht ist, werden die restlichen NCO-Gruppen mit der in Tabelle 1 angegebenen Mischung aus Bis-[3-(trimethoxysilyl)propyl]-amin (Handelsprodukt Dynasilan® 1124 der Firma Evonik) und N-[3-(trimethoxysilyl)propyl]-butylamin (Dynasilan® 1189 der Firma Evonik) umgesetzt. Nachdem der NCO von 0% erreicht ist, wird die Produktmischung abgekühlt und der Feststoffgehalt bestimmt (alle Ansätze werden auf einen FK von 60% berechnet).

### Härterlösung (B)

Zur Herstellung der Härterlösung werden in einem geeigneten Gefäß 13,5 Teile eines handelsüblichen Isophorondiisocyanates (70%ig in Solventnaphta®), 69,5 Teile eines handelsüblichen Isocyanurates von Hexamethylendiisocyanat (90%ig in Butylacetat/Solventnaphta® 1:1), 8,5 Teile Solventnaphta® und 8,5 Teile Butylacetat eingewogen und innig miteinander verrührt. Der Festkörpergehalt (Bindemittelanteil) der Härterlösung beträgt 72,0 %

**Tabelle 1: Zusammensetzung der Komponenten (PF1) bis (PF6) und der Komponenten (PFV1) bis (PFV2)**

| | PFV1 | PFV2 | PF1 | PF2 | PF3 | PF4 | PF5 | PF6 |
|---|---|---|---|---|---|---|---|---|
| Desmodur® N3300 (g) | 100 | 100 | 100 | 100 | 100 | 100 | 100 | 100 |
| Gehalt NCO (mol) | 0,546 | 0,546 | 0,546 | 0,546 | 0,546 | 0,546 | 0,546 | 0,546 |
| Solventnaphta® (g) | 160,2 | 154,2 | 141,6 | 144 | 161,8 | 155,9 | 157,7 | 161 |
| 2,2,3,3,4,4,4-Hepta-fluoro-1-butanol (g) | -- | -- | 4,37 | -- | -- | -- | -- | -- |
| A1620 (g) | -- | 7,96 | -- | 7,96 | 7,96 | 7,96 | 15,92 | 3,98 |
| Restgehalt NCO nach Zugabe Fluoralkohol (mol) | 0,546 | 0,525 | 0,525 | 0,525 | 0,525 | 0,525 | 0,503 | 0,536 |
| Pentanol (g) | 9,63 | 46,24 | 9,25 | 9,25 | 9,25 | 9,25 | 8,86 | 9,44 |
| Pentanol (mol) | 0,109 | 0,525 | 0,105 | 0,105 | 0,105 | 0,105 | 0,101 | 0,107 |
| Restgehalt NCO nach Zugabe Pentanol (mol) | 0,437 | 0 | 0,420 | 0,420 | 0,420 | 0,420 | 0,402 | 0,428 |
| Dynasilan® 1124 (g) | 89,57 | -- | -- | -- | 85,99 | 57,33 | 54,94 | 87,78 |
| Dynasilan® 1189 (g) | 41,16 | -- | 98,78 | 98,78 | 39,51 | 59,27 | 56,80 | 40,33 |
| mit Fluoralkohol umgesetzte NCO-Grup. in Mol-% | -- | 4 | 4 | 4 | 4 | 4 | 8 | 2 |
| mit Silan umgesetzte NCO-Gruppen in Mol-% | 80 | -- | 76,8 | 76,8 | 76,8 | 76,8 | 73,6 | 78,4 |
| Mischungsverhältnis Bissilan/Monosilan in Mol-% | 60/40 | -- | 0/100 | 0/100 | 60/40 | 40/60 | 40/60 | 60/40 |
| Bindemittelanteil der Komponente PF in Gew.-% | 60 | 60 | 60 | 60 | 60 | 60 | 60 | 60 |

### Formulierung der Beschichtungsmittel der erfindungsgemäßen Beispiele B1 bis B6 und des Beschichtungsmittel der Vergleichsbeispiele V1 bis V2 sowie der entsprechenden Beschichtungen der Beispiele 1 bis 6 und der Vergleichsbeispiele V1 bis V2

Zur Herstellung der Stammlacke (S1), (S2), (S3), (S4), (S5), und (S6) der erfindungsgemäßen Beispiele und der Stammlacke (VS1) und, (VS2) der Vergleichsbeispiele werden die in Tabelle 2 angegebenen Bestandteile in angegebener Reihenfolge (von oben beginnend) in einem geeigneten Gefäß in dieser Reihenfolge eingewogen und innig miteinander verrührt.

**Tabelle 2: Zusammensetzung der Stammlacke S1 bis S6 und VS1 bis VS2 in Gew.-Teilen**

| Komponente | (VS1) | (VS2) | (S1) | (S2) | (S3) | (S4) | (S5) | (S6) |
|---|---|---|---|---|---|---|---|---|
| (A1) [Gew.-Tle] | 35 | 35 | 35 | 35 | 35 | 35 | 35 | 35 |
| (A2) [Gew.-Tle] | 26 | 26 | 26 | 26 | 26 | 26 | 26 | 26 |
| Setalux® 91756¹⁾ [Gew.-Teile] | 13 | 13 | 13 | 13 | 13 | 13 | 13 | 13 |
| Paste A3 ²⁾ [Gew.-Tle] | 2 | 2 | 2 | 2 | 2 | 2 | 2 | 2 |
| Cymel® 202³⁾ [Gew.-Teile] | 8 | 8 | 8 | 8 | 8 | 8 | 8 | 8 |
| TINUVIN® 384⁴⁾ [Gew.-Tle] | 1,1 | 1,1 | 1,1 | 1,1 | 1,1 | 1,1 | 1,1 | 1,1 |
| TINUVIN® 292 ⁵⁾ [Gew.-Tle] | 0,9 | 0,9 | 0,9 | 0,9 | 0,9 | 0,9 | 0,9 | 0,9 |
| Verlaufsmittel ⁶⁾ [Gew.-Teile] | 0,15 | 0,15 | 0,15 | 0,15 | 0,15 | 0,15 | 0,15 | 0,15 |
| Butylacetat [Gew.-Tle] | 3,65 | 3,65 | 3,65 | 3,65 | 3,65 | 3,65 | 3,65 | 3,65 |
| Dipropylenglykolmethylether [Gew.-Tle] | 7 | 7 | 7 | 7 | 7 | 7 | 7 | 7 |
| Butanol [Gew.-Tle] | 1 | 1 | 1 | 1 | 1 | 1 | 1 | 1 |
| Solventnaphta® [Gew.-Tle] | 2,2 | 2,2 | 2,2 | 2,2 | 2,2 | 2,2 | 2,2 | 2,2 |
| PFV1 ⁷⁾ [Gew.-Tle] | 1,00 | | | | | | | |
| PFV2 ⁷⁾ [Gew.-Tle] | | 1,00 | | | | | | |
| PF1 ⁷⁾ [Gew.-Tle] | | | 1,00 | | | | | |
| PF2 ⁷⁾ [Gew.-Tle] | | | | 1,00 | | | | |
| PF3 ⁷⁾ [Gew.-Tle] | | | | | 1,00 | | | |
| PF4 ⁷⁾ [Gew.-Tle] | | | | | | 1,00 | | |
| PF5 ⁷⁾ [Gew.-Tle] | | | | | | | 1,00 | |
| PF6 ⁷⁾ [Gew.-Tle] | | | | | | | | 1,00 |
| Menge des Additivs PF (FK) in Gew.-%, bez. auf Bindemittelanteil Stammlack | 1,2 | 1,2 | 1,2 | 1,2 | 1,2 | 1,2 | 1,2 | 1,2 |

| | | | | | | | | |
|---|---|---|---|---|---|---|---|---|
| Erläuterungen zu Tabelle 2: ¹⁾ Setalux® 91756 = handelsübliches Rheologieagens der Firma Nuplex Resins, Niederlande, auf Harnstoff-Basis, gelöst bzw. dispergiert in einem Polyacrylat-Bindemittel, mit einem nichtflüchtigen Anteil von 60 Gew.-% ²⁾ oben beschriebene Paste A3 von Aerosil® ³⁾ Cymel® 202 = handelsübliches Melaminharz der Firma Cytec, 82%ig in Butanol. ⁴⁾ Tinuvin® 384 = handelsübliches Lichtschutzmittel auf Basis eines Benztriazols der Firma BASF S.E. ⁵⁾ Tinuvin® 292 = handelsübliches Lichtschutzmittel auf Basis eines sterisch gehinderten Amins der Firma BASF S.E. ⁶⁾ handelsübliches, polyethermodifiziertes Polymethylalkylsiloxan ⁷⁾ eingesetzt wird jeweils 1 Gew.-Teil der 60%igen Komponente PF | | | | | | | | |

Zur Herstellung der Beschichtungsmittel (KL) der erfindungsgemäßen Beispiele B1 bis B6 und der Beschichtungsmittel der Vergleichsbeispiele V1 bis V2 werden die in Tabelle 3 angegebenen Bestandteile in angegebener Reihenfolge (von oben beginnend) in einem geeigneten Gefäß in dieser Reihenfolge eingewogen und innig miteinander verrührt.

**Tabelle 3: Zusammensetzung der Beschichtungsmittel der Beispiele B1 bis B6 und der Vergleichsbeispiele V1 bis V2 in Gew.-Teilen (bei einem Mischungsverhältnis von 100 Gewichtsteilen Stammlack zu 36 Gewichtsteilen Härter)**

| | Vgl. V1 | Vgl. V2 | B1 | B2 | B3 | B4 | B5 | B6 |
|---|---|---|---|---|---|---|---|---|
| Stammlack (VS1) | 100 | | | | | | | |
| Stammlack (VS2) | | 100 | | | | | | |
| Stammlack (S1) | | | 100 | | | | | |
| Stammlack (S2) | | | | 100 | | | | |
| Stammlack (S3) | | | | | 100 | | | |
| Stammlack (S4) | | | | | | 100 | | |
| Stammlack (S5) | | | | | | | 100 | |
| Stammlack (S6) | | | | | | | | 100 |
| Härterlö-sung (B) | 36 | 36 | 36 | 36 | 36 | 36 | 36 | 36 |
| Bimi.-anteil im Gesamtlack in Gew.-% | 55,0 | 55,0 | 55,0 | 55,0 | 55,0 | 55,0 | 55,0 | 55,0 |
| Menge PF (FK) in Gew.-%, bez. auf Bimianteil Gesamtlack | 0,8 | 0,8 | 0,8 | 0,8 | 0,8 | 0,8 | 0,8 | 0,8 |

Bonderbleche werden nacheinander mit einer handelsüblichen KTL (CathoGuard® 500 der Firma BASF Coatings GmbH) und mit einem handelsüblichen wasserbasierten Füller (SecuBloc® der Firma BASF Coatings GmbH) beschichtet und jeweils eingebrannt. Danach wird mit handelsüblichem schwarzen Wasserbasislack (ColorBrite® der Firma BASF Coatings GmbH) beschichtet und 7 min bei 80°C getrocknet. Anschließend werden die Beschichtungsmittel der Beispiele B1 bis B6 und der Vergleichsbeispiele V1 bis V2 mit einer Fließbecherpistole appliziert. Nach der Applikation wird der Lackaufbau drei mal bei 135°C über einen Zeitraum von je 20 Minuten eingebrannt. und 20 Minuten bei 135°C eingebrannt.

Von der so erhaltenen Beschichtung wird jeweils die Härte bestimmt. Alle Beschichtungen zeichnen sich durch eine gute Härte aus.

Danach wird ein Gitterschnitt entsprechend der Norm DIN EN ISO 2409 DE geritzt und die Haftung mit Tesa-Abriss getestet. Die Prüfergebnisse sind ebenfalls in Tabelle 4 dargestellt.

**Tabelle 4: Prüfergebnisse der Beschichtungen der Beispiele B1 bis B6 und der Vergleichsbeispiele V1 bis V2**

| | Vgl. V1 | Vgl. V2 | B1 | B2 | B3 | B4 | B5 | B6 |
|---|---|---|---|---|---|---|---|---|
| Gitterschnitt | Gt 5 | Gt 5 | Gt 2 | Gt 2 | Gt 3 | Gt 3 | Gt 3-4 | Gt 4 |
| Menge PF im Gesamtlack, be-zogen auf Bi.anteil Gesamtlack, in Gew.-% | 0,8 | 0,8 | 0,8 | 0,8 | 0,8 | 0,8 | 0,8 | 0,8 |
| in PF mit Fluoralkohol umges. NCO-Grup. in Mol-% | 0 | 4 | 4 | 4 | 4 | 4 | 8 | 2 |
| Menge Fluoralkohol in PF in Gew.-% (bezogen auf Lösung PF) | 0 | 3,1 | 1,2 | 2,2 | 2,0 | 2,0 | 4,0 | 1,0 |
| Menge Fluoralkohol in PF in Gew.-% (bezogen auf FK PF) | 0 | 5,2 | 2,1 | 3,7 | 3,3 | 3,4 | 6,7 | 1,6 |
| Menge Fluoralkohol im Ge-samtlack ¹⁾, bezogen auf Bi.anteil, in Gew.-% | -- | 0,025 | 0,009 | 0,018 | 0,016 | 0,016 | 0,032 | 0,008 |
| in PF mit Silan umges. NCO-Gruppen in Mol-% | 80 | -- | 76,8 | 76,8 | 76,8 | 76,8 | 73,6 | 78,4 |
| Mischungsverhältnis Bissilan/Monosilan in Mol-% | 60/ 40 | -- | 0/100 | 0/100 | 60/ 40 | 40/ 60 | 40/ 60 | 60/ 40 |

| | | | | | | | | |
|---|---|---|---|---|---|---|---|---|
| **Erläuterungen zu Tabelle 4:** ¹⁾ berechnet aus Anteil PF im Stammlack multipliziert mit Menge F-Alkohol im Additiv PF | | | | | | | | |

## Patentansprüche

1. Nichtwässrige Beschichtungsmittelzusammensetzung enthaltend mindestens eine polyhydroxylgruppenhaltige Komponente (A), mindestens eine polyisocyanatgruppenhaltige Komponente (B), mindestens einen Katalysator (D)
und
mindestens ein, von der Komponente (B) verschiedenes, Urethanadditiv (PF), welches mindestens eine Perfluoralkylgruppe der Formel (I)
CR¹₃-(CR²₂)ₓ- (I),
mit
R¹, R² = unabhängig voneinander H, F und/oder CF₃, wobei aber R¹ und R² nicht gleichzeitig H sein dürfen und
x = 1 bis 20,
und
mindestens eine Silangruppe der Formel (II) aufweist
-X-Si-R³ₛG₃₋ₛ (II)
mit
G = identische oder unterschiedliche hydrolysierbare Gruppen,
X = organischer Rest,
R³ = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
s = 0 bis 2,
**dadurch gekennzeichnet, dass** das Urethanadditiv (PF) hergestellt worden ist, indem
0,5 bis 20,0 Mol-% der ursprünglich vorhandenen Isocyanatgruppen mindestens eines Polyisocyanates (PI) mit einer - von der Komponente (IIa) verschiedenen - Komponente (la), die mindestens eine Perfluoralkylgruppe der Formel (I) und eine gegenüber Isocyanatgruppen reaktive Gruppe aufweist
und
10,0 bis 99,5 Mol-% der ursprünglich vorhandenen Isocyanatgruppen des Polyisocyanates (PI) mit einer - von der Komponente (la) verschiedenen - Komponente (IIa), die mindestens eine Silangruppe der Formel (II) und eine gegenüber Isocyanatgruppen reaktive Gruppe aufweist,
umgesetzt worden sind.

2. Beschichtungsmittelzusammensetzung nach Anspruch 1, **dadurch gekennzeichnet, dass** das von der Komponente (B) verschiedene Urethanadditiv (PF) mindestens eine Perfluoralkylgruppe der Formel (I)
CR¹₃-(CR²₂)ₓ- (I),
mit
R¹, R² = unabhängig voneinander H, F und/oder CF₃, wobei aber R¹ und R² nicht gleichzeitig H sein dürfen und
x = 3 bis 11, bevorzugt x = 5 bis 7, ist
und
mindestens eine Silangruppe der Formel (II) aufweist
-X-Si-R³ₛG₃₋ₛ (II)
mit
G = Halogen, Alkoxygruppe, Alkylcarbonylgruppe und/oder Acyloxygruppe,insbesondere Alkoxygruppe,
X = linearer und/oder verzweigter Alkylen- oder Cycloalkylenrest mit 1 bis 20 Kohlenstoffatomen, bevorzugt X = Alkylenrest mit 1 bis 4 Kohlenstoffatomen,
R³ = Alkylrest, insbesondere mit 1 bis 6 C-Atomen,
s = 0 bis 1, bevorzugt s = 0.

3. Beschichtungsmittelzusammensetzung nach Anspruch 1 oder 2, **dadurch gekennzeichnet, dass** das Urethanadditiv (PF) hergestellt worden ist, indem
0,5 bis 20,0 Mol-% der ursprünglich vorhandenen Isocyanatgruppen des Polyisocyanates (PI) mit einer Komponente (la),
30,0 bis 98,5 Mol-% der ursprünglich vorhandenen Isocyanatgruppen des Polyisocyanates (PI) mit einer Komponente (IIa) und
1,0 bis 69,5 Mol-% der ursprünglich vorhandenen Isocyanatgruppen des Polyisocyanates (PI) mit einer monofunktionellen - von den Komponenten (la) und (IIa) verschiedenen - gegenüber Isocyanatgruppen reaktiven Komponente (IIIa) umgesetzt worden sind.

4. Beschichtungsmittelzusammensetzung nach einem der Ansprüche 1 bis 3, **dadurch gekennzeichnet, dass** das Urethanadditiv (PF) hergestellt worden ist, indem
1,0 bis 16,0 Mol-%, bevorzugt 1,5 bis 10,0 Mol-%, der ursprünglich vorhandenen Isocyanatgruppen des Polyisocyanates (PI) mit einer Komponente (la),
64,0 bis 89,0 Mol-%-%, bevorzugt 66,0 bis 86,0 Mol-%, der ursprünglich vorhandenen Isocyanatgruppen des Polyisocyanates (PI) mit einer Komponente (IIa) und
10,0 bis 30,0 Mol-%, bevorzugt 12,5 bis 25,0 Mol-%,der ursprünglich vorhandenen Isocyanatgruppen des Polyisocyanates (PI) mit einer Komponente (IIIa)
umgesetzt worden sind.

5. Beschichtungsmittelzusammensetzung nach einem der Ansprüche 1 bis 4, **dadurch gekennzeichnet, dass** in dem Urethanadditiv (PF) 95 bis 100 Mol-%, bevorzugt 100 Mol-%, der ursprünglich vorhandenen Isocyanatgruppen des Polyisocyanates (PI) mit den Komponenten (la), (IIa) und ggf. (IIIa) umgesetzt worden sind.

6. Beschichtungsmittelzusammensetzung nach einem der Ansprüche 1 bis 5, **dadurch gekennzeichnet, dass** die zur Herstellung des Urethanadditivs (PF) eingesetzte Komponente (IIa) ein oder mehrere Aminosilane der Formel (IIa-1)
H-NR⁴ₜ-[X-Si-R³ₛG₃₋ₛ]₂₋ₜ (IIa-1),
wobei X, R³, G und s die bei Formel (II) angegebene Bedeutung haben, R⁴ = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, und t= 0 oder 1 ist,
oder eine Mischung aus mindestens einer Verbindung der Formel (IIa-2) und mindestens einer Verbindung der Formel (IIa-3)
H-NR⁴-(X-SiR³ₛ(OR⁵)₃₋ₛ) (IIa-2)
HN(X-SiR³ᵤ(OR⁵)₃₋ᵤ)ₙ(X'-SiR³'_{w}(OR⁵')_{3-w})ₘ (IIa-3),
ist,
wobei R³, R⁴, und s die bei Formel (IIa-1) angegebene Bedeutung haben,
R⁵, R⁵' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R⁵, R⁵' = Ethyl und/oder Methyl, besonders bevorzugt R⁵, R⁵' = Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
n = 0 bis 2, m = 0 bis 2, m+n = 2 sowie u, w = 0 bis 2 ist.

7. Beschichtungsmittelzusammensetzung nach einem der Ansprüche 1 bis 6, **dadurch gekennzeichnet, dass** das Urethanadditiv (PF) hergestellt worden ist, indem als Komponente (IIa) eine Mischung aus 100 bis 5 mol-%, bevorzugt 100 bis 10 mol-%, besonders bevorzugt 100 bis 20 mol-%, ganz besonders bevorzugt 100 bis 40 mol-%, jeweils bezogen auf die Gesamtmenge der Verbindungen (IIa-2) plus (IIa-3), mindestens einer Verbindung der Formel (IIa-2)
und
0 bis 95 mol-%, bevorzugt 0 bis 90 mol-%, besonders bevorzugt 0 bis 80 mol-%, ganz besonders bevorzugt 0 bis 60 mol-%, jeweils bezogen auf die Gesamtmenge der Verbindungen (IIa-2) plus (IIa-3), mindestens einer Verbindung der Formel (IIa-3) eingesetzt worden ist.

8. Beschichtungsmittelzusammensetzung nach einem der Ansprüche 1 bis 7, **dadurch gekennzeichnet, dass** die zur Herstellung des Urethanadditivs (PF) eingesetzte Komponente (la) ein Fluoralkohol der Formel (la-1) ist
CR¹₃-(CR²₂)ₓ-(CH₂)_{y}-O-A_{z}-H (la-1),
wobei
R¹, R² = unabhängig voneinander H, F und/oder CF₃ sind, aber R¹ und R² nicht gleichzeitig H sein dürfen,
x = 1 bis 20, bevorzugt x = 3 bis 11, besonders bevorzugt x = 5 bis 7,
y = 1-6,
z = 0 - 100, bevorzugt z = 0,
A = CR'R"-CR'''R''''-O oder (CR'R")ₐ-O oder CO-(CR'R")_{b}-O,
R', R", R''', R'''' = unabhängig voneinander H, Alkyl, Cycloalkyl, Aryl, beliebiger organischer Rest mit 1 bis 25 C-Atomen,
a,b = 3 - 5, ist.

9. Beschichtungsmittelzusammensetzung nach einem der Ansprüche 1 bis 8, **dadurch gekennzeichnet, dass** die zur Herstellung des Urethanadditivs (PF) eingesetzte Komponente (IIIa) ausgewählt ist aus der Gruppe der primären Monoalkohole, der sekundären Monoalkohole, der teriären Monoalkohole und/oder der sekundären Monoamine.

10. Beschichtungsmittelzusammensetzung nach einem der Ansprüche 1 bis 9, **dadurch gekennzeichnet, dass** das zur Herstellung des Urethanadditivs (PF) eingesetzte Polyisocyanat (PI) ausgewählt ist bzw. sind aus der Gruppe der aliphatischen und/oder cycloaliphatischen Polyisocyanate, insbesondere aus der Gruppe bestehend aus Tetramethylen-1,4-diisocyanat, Hexamethylen-1,6-diisocyanat, 2,2,4-Trimethylhexan-1,6-diisocyanat, Ethylendiisocyanat, 1,12-Dodecandiisocyanat, Isophorondiisocyanat, 4,4'-Methylendicyclohexyldiisocyanat und Mischungen der vorgenannten Polyisocyanate sowie der durch Trimerisierung, Dimerisierung, Urethan-, Biuret-, Uretdion- und/oder Allophanatbildung von solchen Polyisocyanaten abgeleiteten Polyisocyanate, insbesondere der Biurete und/oder der Allophanate und/oder der Isocyanurate solcher Polyisocyanate.

11. Beschichtungsmittelzusammensetzung nach einem der Ansprüche 1 bis 10, **dadurch gekennzeichnet, dass** die Beschichtungsmittelzusammensetzung das Urethanadditivs (PF) in einer Menge von 0,05 bis 10,0 Gew.-%, bevorzugt von 0,1 bis 5,0 Gew.-%, jeweils bezogen auf den Bindemittelanteil der Beschichtungsmittelzusammensetzung, enthält.

12. Beschichtungsmittelzusammensetzung nach einem der Ansprüche 1 bis 11, **dadurch gekennzeichnet, dass** die Polyole (A) eine OH-Zahl von 30 bis 400 mg KOH/g, insbesondere zwischen 70 und 250 mg KOH/g, aufweisen und/oder dass die Polyole (A) ausgewählt sind aus der Gruppe der Polyesterpolyole, Polyurethanpolyole, Polysiloxanpolyole, Polyacrylatpolyole, Polymethacrylatpolyole oder Mischungen dieser Polyole, insbesondere der Polyesterpolyole, Polyacrylatpolyole, Polymethacrylatpolyole, Polyurethanpolyole oder deren Mischungen.

13. Verfahren zur Herstellung einer Mehrschichtlackierung, bei dem auf ein gegebenenfalls vorbeschichtetes Substrat eine pigmentierte Basislackschicht und danach eine Schicht aus der Beschichtungsmittelzusammensetzung nach einem der Ansprüche 1 bis 12 aufgebracht wird.

14. Verwendung der Beschichtungsmittelzusammensetzung nach einem der Ansprüche 1 bis 12 als Klarlack beziehungsweise Anwendung des Verfahrens nach Anspruch 13 für die Automobilserienlackierung, die Lackierung von Automobil-Anbauteilen und/oder Nutzfahrzeugen und die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 12 hergestellt worden ist.

## Claims

1. Nonaqueous coating material composition comprising at least one polyhydroxyl group-containing component (A),
at least one polyisocyanate group-containing component (B),
at least one catalyst (D)
and
at least one urethane additive (PF) which is different from component (B) and which has at least one perfluoroalkyl group of the formula (I)
CR¹₃-(CR²₂)ₓ- (I),
where
R¹ and R² independently of one another are H, F and/or CF₃, but wherein R¹ and R² may not both be H, and
x is 1 to 20,
and
has at least one silane group of the formula (II)
-X-Si-R³ₛG₃₋ₛ (II)
where
G is identical or different hydrolyzable groups,
X is organic radical,
R³ is alkyl, cycloalkyl, aryl, or aralkyl, it being possible for the carbon chain to be interrupted by nonadjacent oxygen, sulfur, or NRa groups, where Ra is alkyl, cycloalkyl, aryl or aralkyl,
s is 0 to 2,
**characterized in that** the urethane additive (PF) has been prepared by reaction of
0.5 to 20.0 mol% of the isocyanate groups originally present in at least one polyisocyanate (PI) with a component (Ia) which is different from component (IIa) and which has at least one perfluoroalkyl group of the formula (I) and one group that is reactive toward isocyanate groups, and
10.0 to 99.5 mol% of the isocyanate groups originally present in the polyisocyanate (PI) with a component (IIa) which is different from component (Ia) and which has at least one silane group of the formula (II) and one group that is reactive toward isocyanate groups.

2. Coating material composition according to Claim 1, **characterized in that** the urethane additive (PF) different from component (B) has at least one perfluoroalkyl group of the formula (I)
CR¹₃-(CR²₂)ₓ- (I),
where
R¹ and R² independently of one another are H, F and/or CF₃, but where R¹ and R² must not simultaneously be H, and
x is 3 to 11, preferably 5 to 7,
and
at least one silane group of the formula (II)
-X-Si-R³ₛG₃₋ₛ (II)
where
G is halogen, alkoxy group, alkylcarbonyl group and/or acyloxy group, more particularly alkoxy group,
X is linear and/or branched alkylene or cycloalkylene radical having 1 to 20 carbon atoms, preferably alkylene radical having 1 to 4 carbon atoms,
R³ is alkyl radical, more particularly having 1 to 6 C atoms, and
s is 0 to 1, preferably 0.

3. Coating material composition according to Claim 1 or 2, **characterized in that** the urethane additive (PF) has been prepared by reaction of
0.5 to 20.0 mol% of the isocyanate groups originally present in the polyisocyanate (PI) with a component (Ia),
30.0 to 98.5 mol% of the isocyanate groups originally present in the polyisocyanate (PI) with a component (IIa), and
1.0 to 69.5 mol% of the isocyanate groups originally present in the polyisocyanate (PI) with a monofunctional component (IIIa) which is different from components (Ia) and (IIa) and which is reactive toward isocyanate groups.

4. Coating material composition according to any of Claims 1 to 3, **characterized in that** the urethane additive (PF) has been prepared by reaction of
1.0 to 16.0 mol%, preferably 1.5 to 10.0 mol%, of the isocyanate groups originally present in the polyisocyanate (PI) with a component (Ia),
64.0 to 89.0 mol%%, preferably 66.0 to 86.0 mol%, of the isocyanate groups originally present in the polyisocyanate (PI) with a component (IIa), and
10.0 to 30.0 mol%, preferably 12.5 to 25.0 mol%, of the isocyanate groups originally present in the polyisocyanate (PI) with a component (IIIa).

5. Coating material composition according to any of Claims 1 to 4, **characterized in that**, in the urethane additive (PF), 95 to 100 mol%, preferably 100 mol%, of the isocyanate groups originally present in the polyisocyanate (PI) have been reacted with components (Ia), (IIa), and optionally (IIIa) .

6. Coating material composition according to any of Claims 1 to 5, **characterized in that** the component (IIa) used for preparing the urethane additive (PF) comprises
one or more aminosilanes of the formula (IIa-1)
H-NR⁴ₜ-[X-Si-R³ₛG₃₋ₛ]₂₋ₜ (IIa-1),
where X, R³, G, and s have the definition given for formula (II), R⁴ is hydrogen, alkyl, cycloalkyl, aryl, or aralkyl, it being possible for the carbon chain to be interrupted by nonadjacent oxygen, sulfur, or NRa groups, where Ra is alkyl, cycloalkyl, aryl, or aralkyl, and t is 0 or 1,
or a mixture of at least one compound of the formula (IIa-2) and at least one compound of the formula (IIa-3)
H-NR⁴-(X-SiR³ₛ(OR⁵)₃₋ₛ) (IIa-2)
HN(X-SiR³ᵤ(OR⁵)₃₋ᵤ)ₙ(X'-SiR³'_{w}(OR⁵')_{3-w})ₘ (IIa-3),
where R³, R⁴, and s have the definition given for formula (IIa-1),
R⁵ and R⁵' are hydrogen, alkyl, or cycloalkyl, it being possible for the carbon chain to be interrupted by nonadjacent oxygen, sulfur, or NRa groups, where Ra is alkyl, cycloalkyl, aryl, or aralkyl, R⁵ and R⁵' preferably being ethyl and/or methyl, more preferably methyl,
X and X' are linear and/or branched alkylene or cycloalkylene radical having 1 to 20 carbon atoms, preferably alkylene radical having 1 to 4 carbon atoms,
n is 0 to 2, m is 0 to 2, m+n is 2, and u and w are 0 to 2.

7. Coating material composition according to any of Claims 1 to 6, **characterized in that** the urethane additive (PF) has been prepared using as component (IIa) a mixture of
100 to 5 mol%, preferably 100 to 10 mol%, more preferably 100 to 20 mol%, very preferably 100 to 40 mol%, based in each case on the total amount of the compounds (IIa-2) plus (IIa-3), of at least one compound of the formula (IIa-2)
and
0 to 95 mol%, preferably 0 to 90 mol%, more preferably 0 to 80 mol%, very preferably 0 to 60 mol%, based in each case on the total amount of the compounds (IIa-2) plus (IIa-3), of at least one compound of the formula (IIa-3).

8. Coating material composition according to any of Claims 1 to 7, **characterized in that** the component (Ia) used for preparing the urethane additive (PF) is a fluoroalcohol of the formula (Ia-1)
CR¹₃-(CR²₂)ₓ-(CH₂)_{y}-O-A_{z}-H (Ia-1),
where
R¹ and R² independently of one another are H, F and/or CF³, but R¹ and R² must not simultaneously be H,
x is 1 to 20, preferably 3 to 11, more preferably 5 to 7,
y is 1 - 6,
z is 0 - 100, preferably 0,
A is CR'R"-CR"'R""-O or (CR'R")ₐ-O or CO-(CR'R")_{b}-O,
R', R", R'", and R"" independently of one another are H, alkyl, cycloalkyl, aryl, any organic radical having 1 to 25 C atoms, and
a and b are 3 - 5.

9. Coating material composition according to any of Claims 1 to 8, **characterized in that** the component (IIIa) used for preparing the urethane additive (PF) is selected from the group of primary monoalcohols, secondary monoalcohols, tertiary monoalcohols and/or secondary monoamines.

10. Coating material composition according to any of Claims 1 to 9, **characterized in that** the polyisocyanate (PI) used for the production of the urethane additive (PF) is or are selected from the group of aliphatic and/or cycloaliphatic polyisocyanates, more particularly from the group consisting of tetramethylene 1,4-diisocyanate, hexamethylene 1,6-diisocyanate, 2,2,4-trimethylhexane 1,6-diisocyanate, ethylene diisocyanate, 1,12-dodecane diisocyanate, isophorone diisocyanate, 4,4'-methylenedicyclohexyl diisocyanate, and mixtures of the aforementioned polyisocyanates, and also of the polyisocyanates derived from such polyisocyanates by trimerization, dimerization, urethane formation, biuret formation, uretdione formation and/or allophanate formation, more particularly the biurets and/or the allophanates and/or the isocyanurates of such polyisocyanates.

11. Coating material composition according to any of Claims 1 to 10, **characterized in that** the coating material composition comprises the urethane additive (PF) in an amount of 0.05 to 10.0 wt%, preferably of 0.1 to 5.0 wt%, based in each case on the binder fraction of the coating material composition.

12. Coating material composition according to any of Claims 1 to 11, **characterized in that** the polyols (A) have an OH number of 30 to 400 mg KOH/g, more particularly between 70 and 250 mg KOH/g, and/or **in that** the polyols (A) are selected from the group of polyester polyols, polyurethane polyols, polysiloxane polyols, polyacrylate polyols, polymethacrylate polyols, or mixtures of these polyols, more particularly the polyester polyols, polyacrylate polyols, polymethacrylate polyols, polyurethane polyols, or mixtures thereof.

13. Method for producing a multicoat paint system by applying a pigmented basecoat film to an optionally precoated substrate and thereafter applying a film of the coating material composition according to any of Claims 1 to 12.

14. Use of the coating material composition according to any of Claims 1 to 12 as clearcoat material or application of the method according to Claim 13 for automotive OEM finishing, the finishing of parts for installation in or on automobiles and/or utility vehicles, and automotive refinish.

15. Multicoat effect and/or color paint system comprising at least one pigmented basecoat and at least one clearcoat disposed thereon, **characterized in that** the clearcoat has been produced from a coating material composition according to any of Claims 1 to 12.

## Revendications

1. Composition d'agent de revêtement non aqueuse contenant :
au moins un composant contenant des groupes polyhydroxyle (A),
au moins un composant contenant des groupes polyisocyanate (B),
au moins un catalyseur (D)
et
au moins un additif uréthane (PF), différent du composant (B), qui comprend au moins un groupe perfluoroalkyle de formule (I)
CR¹₃-(CR²₂)ₓ- (I)
avec
R¹, R² = indépendamment l'un de l'autre H, F et/ou CF₃,
R¹ et R² ne pouvant toutefois pas représenter simultanément H, et
x = 1 à 20,
et
au moins un groupe silane de formule (II)
-X-Si-R³ₛG₃₋ₛ (II)
avec
G = groupes hydrolysables identiques ou différents,
X = radical organique,
R³ = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
s = 0 à 2,
**caractérisée en ce que** l'additif uréthane (PF) a été fabriqué par mise en réaction de
0,5 à 20,0 % en moles des groupes isocyanate initialement présents d'au moins un polyisocyanate (PI) avec un composant (Ia), différent du composant (IIa), qui comprend au moins un groupe perfluoroalkyle de formule (I) et un groupe réactif avec les groupes isocyanate,
et
10,0 à 99,5 % en moles des groupes isocyanate initialement présents du polyisocyanate (PI) avec un composant (IIa), différent du composant (Ia), qui comprend au moins un groupe silane de formule (II) et un groupe réactif avec les groupes isocyanate.

2. Composition d'agent de revêtement selon la revendication 1, **caractérisée en ce que** l'additif uréthane (PF) différent du composant (B) comprend au moins un groupe perfluoroalkyle de formule (I)
CR¹₃-(CR²₂)ₓ- (I)
avec
R¹, R² = indépendamment l'un de l'autre H, F et/ou CF₃,
R¹ et R² ne pouvant toutefois pas représenter simultanément H, et
x = 3 à 11, de préférence x = 5 à 7,
et
au moins un groupe silane de formule (II)
-X-Si-R³ₛG₃₋ₛ (II)
avec
G = halogène, groupe alcoxy, groupe alkylcarbonyle et/ou groupe acyloxy, notamment groupe alcoxy,
X = radical alkylène ou cycloalkylène linéaire et/ou ramifié de 1 à 20 atomes de carbone, de préférence X = radical alkylène de 1 à 4 atomes de carbone,
R³ = radical alkyle, notamment de 1 à 6 atomes C,
s = 0 à 1, de préférence s = 0.

3. Composition d'agent de revêtement selon la revendication 1 ou 2, **caractérisée en ce que** l'additif uréthane (PF) a été fabriqué par mise en réaction de 0,5 à 20,0 % en moles des groupes isocyanate initialement présents du polyisocyanate (PI) avec un composant (Ia),
30,0 à 98,5 % en moles des groupes isocyanate initialement présents du polyisocyanate (PI) avec un composant (IIa) et
1,0 à 69,5 % en moles des groupes isocyanate initialement présents du polyisocyanate (PI) avec un composant (IIIa) monofonctionnel réactif avec les groupes isocyanate, différent des composants (Ia) et (IIa) .

4. Composition d'agent de revêtement selon l'une quelconque des revendications 1 à 3, **caractérisée en ce que** l'additif uréthane (PF) a été fabriqué par mise en réaction de
1,0 à 16,0 % en moles, de préférence 1,5 à 10,0 % en moles, des groupes isocyanate initialement présents du polyisocyanate (PI) avec un composant (Ia),
64,0 à 89,0 % % en moles, de préférence 66,0 à 86,0 % en moles, des groupes isocyanate initialement présents du polyisocyanate (PI) avec un composant (IIa) et
10,0 à 30,0 % en moles, de préférence 12,5 à 25,0 % en moles, des groupes isocyanate initialement présents du polyisocyanate (PI) avec un composant (IIIa).

5. Composition d'agent de revêtement selon l'une quelconque des revendications 1 à 4, **caractérisée en ce que**, dans l'additif uréthane (PF), 95 à 100 % en moles, de préférence 100 % en moles, des groupes isocyanate initialement présents du polyisocyanate (PI) ont été mis en réaction avec les composants (Ia), (IIa) et éventuellement (IIIa).

6. Composition d'agent de revêtement selon l'une quelconque des revendications 1 à 5, **caractérisée en ce que** le composant (IIa) utilisé pour la fabrication de l'additif uréthane (PF) est
un ou plusieurs aminosilanes de formule (IIa-1)
H-NR⁴ₜ-[X-Si-R³ₛG₃₋ₛ]₂₋ₜ (IIa-1)
dans laquelle X, R³, G et s ont la signification indiquée pour la formule (II), R⁴ = hydrogène, alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, et t = 0 ou 1,
ou un mélange d'au moins un composé de formule (IIa-2) et d'au moins un composé de formule (IIa-3)
H-NR⁴-(X-SiR³ₛ(OR⁵)₃₋ₛ) (IIa-2)
HN(X-SiR³ᵤ(OR⁵)₃₋ᵤ)ₙ(X'-SiR³'_{w}(OR⁵')_{3-w})ₘ (IIa-3)
dans lesquelles R³, R⁴ et s ont la signification indiquée pour la formule (IIa-1),
R⁵, R⁵' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle, de préférence R⁵, R⁵' = éthyle et/ou méthyle, de manière particulièrement préférée R⁵, R⁵' = méthyle,
X, X' = radical alkylène ou cycloalkylène linéaire et/ou ramifié de 1 à 20 atomes de carbone, de préférence X, X' = radical alkylène de 1 à 4 atomes de carbone,
n = 0 à 2, m = 0 à 2, m+n = 2, et u, w = 0 à 2.

7. Composition d'agent de revêtement selon l'une quelconque des revendications 1 à 6, **caractérisée en ce que** l'additif uréthane (PF) a été fabriqué en utilisant en tant que composant (IIa) un mélange de :
100 à 5 % en moles, de préférence 100 à 10 % en moles, de manière particulièrement préférée 100 à 20 % en moles, de manière tout particulièrement préférée 100 à 40 % en moles, à chaque fois par rapport à la quantité totale des composés (IIa-2) plus (IIa-3), d'au moins un composé de formule (IIa-2),
et
0 à 95 % en moles, de préférence 0 à 90 % en moles, de manière particulièrement préférée 0 à 80 % en moles, de manière tout particulièrement préférée 0 à 60 % en moles, à chaque fois par rapport à la quantité totale des composés (IIa-2) plus (IIa-3), d'au moins un composé de formule (IIa-3).

8. Composition d'agent de revêtement selon l'une quelconque des revendications 1 à 7, **caractérisée en ce que** le composant (Ia) utilisé pour la fabrication de l'additif uréthane (PF) est un fluoroalcool de formule (Ia-1)
CR¹₃-(CR²₂)ₓ-(CH₂)_{y}-O-A_{z}-H (Ia-1)
dans laquelle
R¹, R² = indépendamment l'un de l'autre H, F et/ou CF₃,
R¹ et R² ne pouvant toutefois pas représenter simultanément H,
x = 1 à 20, de préférence x = 3 à 11, de manière particulièrement préférée x = 5 à 7,
y = 1 à 6,
z = 0 à 100, de préférence z = 0,
A = CR'R"-CR"'R""-O ou (CR'R")ₐ-O ou CO-(CR'R")_{b}-O,
R', R", R"', R"" = indépendamment les uns des autres H, alkyle, cycloalkyle, aryle, radical organique quelconque de 1 à 25 atomes C,
a, b = 3 à 5.

9. Composition d'agent de revêtement selon l'une quelconque des revendications 1 à 8, **caractérisée en ce que** le composant (IIIa) utilisé pour la fabrication de l'additif uréthane (PF) est choisi dans le groupe constitué par les monoalcools primaires, les monoalcools secondaires, les monoalcools tertiaires et/ou les monoamines secondaires.

10. Composition d'agent de revêtement selon l'une quelconque des revendications 1 à 9, **caractérisée en ce que** le polyisocyanate (PI) utilisé pour la fabrication de l'additif uréthane (PF) est choisi dans le groupe constitué par les polyisocyanates aliphatiques et/ou cycloaliphatiques, notamment du groupe constitué par le 1,4-diisocyanate de tétraméthylène, le 1,6-diisocyanate d'hexaméthylène, le 1,6-diisocyanate de 2,2,4-triméthylhexane, le diisocyanate d'éthylène, le diisocyanate de 1,12-dodécane, le diisocyanate d'isophorone, le diisocyanate de 4,4'-méthylène-dicyclohexyle et les mélanges des polyisocyanates susmentionnés, ainsi que les polyisocyanates dérivés par trimérisation, dimérisation, formation d'uréthane, de biuret, d'uretdione et/ou d'allophanate de tels polyisocyanates, notamment les biurets et/ou les allophanates et/ou les isocyanurates de tels polyisocyanates.

11. Composition d'agent de revêtement selon l'une quelconque des revendications 1 à 10, **caractérisée en ce que** la composition d'agent de revêtement contient l'additif uréthane (PF) en une quantité de 0,05 à 10,0 % en poids, de préférence de 0,1 à 5,0 % en poids, à chaque fois par rapport à la proportion de liant de la composition d'agent de revêtement.

12. Composition d'agent de revêtement selon l'une quelconque des revendications 1 à 11, **caractérisée en ce que** les polyols (A) présentent un indice OH de 30 à 400 mg de KOH/g, notamment compris entre 70 et 250 mg de KOH/g, et/ou **en ce que** les polyols (A) sont choisis dans le groupe constitué par les polyester-polyols, les polyuréthane-polyols, les polysiloxane-polyols, les polyacrylate-polyols, les polyméthacrylate-polyols ou les mélanges de ces polyols, notamment les polyester-polyols, les polyacrylate-polyols, les polyméthacrylate-polyols, les polyuréthane-polyols ou leurs mélanges.

13. Procédé de fabrication d'un vernissage multicouche, selon lequel une couche de vernis de base pigmentée, puis une couche de la composition d'agent de revêtement selon l'une quelconque des revendications 1 à 12 sont appliquées sur un substrat éventuellement pré-revêtu.

14. Utilisation de la composition d'agent de revêtement selon l'une quelconque des revendications 1 à 12 en tant que vernis transparent ou utilisation du procédé selon la revendication 13 pour le vernissage en série d'automobiles, le vernissage de composants d'automobiles et/ou de véhicules utilitaires et le vernissage de réparation d'automobiles.

15. Vernissage multicouche à effet et/ou colorant constitué par au moins une couche de vernis de base pigmentée et au moins une couche de vernis transparent agencée sur celle-ci, **caractérisé en ce que** la couche de vernis transparent a été fabriquée à partir d'une composition d'agent de revêtement selon l'une quelconque des revendications 1 à 12.
